# EUROPEAN PATENT SPECIFICATION

(11) **EP 1 795 420 B1**
(45) Date of publication and mention of the grant of the patent: **08.09.2010**
(21) Application number: 06025463.8
(22) Date of filing: 08.12.2006
(51) Int. Cl.: B60T 11/20, B60T 8/26, B60T 8/32, B60T 7/10

(54) **Interlocking brake system for bar-handle vehicle**
Verriegeltes Bremssystem für Fahrzeug mit Lenkstange
Système de freinage verrouillé pour véhicule avec guidon

(30) Priority: 08.12.2005 JP 2005354956; 28.12.2005 JP 2005377667
(43) Date of publication of application: 13.06.2007
(73) Proprietor: NISSIN KOGYO CO., LTD., Ueda-shi, Nagano (JP)
(72) Inventor: Kusano, Toshihiro c/o NISSIN KOGYO CO. LTD., Nagano (JP); Hatakoshi, Genichi c/o NISSIN KOGYO CO. LTD., Nagano (JP); Tsuchida, Tetsuo c/o NISSIN KOGYO CO. LTD., Nagano (JP)
(74) Representative: HOFFMANN EITLE

(56) References cited:
- DE-A1- 3 012 146
- JP-A- 9 254 771
- US-A- 4 176 886

## Description

### BACKGROUND OF THE INVENTION

### Field of the invention

The present invention relates to an interlocking brake system for a bar-handle vehicle , and more particularly, to an interlocking brake system for a bar-handle vehicle integrally provided with an interlocking slave cylinder and a front-wheel hydraulic pressure master cylinder for a hydraulic pressure system of an interlocking brake.

### Description of the related art

In recent years, there has been suggested an interlocking brake system for a bar-handle vehicle having a first hydraulic pressure system for supplying hydraulic pressure to a front-wheel brake from a front-wheel hydraulic pressure master cylinder in accordance with an operation of a front-wheel brake bar and a second hydraulic pressure system for supplying a hydraulic pressure to a rear-wheel brake and an interlocking slave cylinder from a rear-wheel actuator in accordance with an operation of a rear-wheel brake operation element and operating the front-wheel hydraulic pressure master cylinder by the use of the interlocking slave cylinder to supply the hydraulic pressure to the front-wheel brake. The front-wheel hydraulic pressure master cylinder and the interlocking slave cylinder are disposed in parallel and an intermediate portion of an arc-shaped interlocking member of which both ends abut on a piston end of the front-wheel hydraulic pressure master cylinder and a piston end of the interlocking slave cylinder, respectively, is rotatably connected to the front-wheel brake lever. When the front-wheel brake lever is operated to operate the front-wheel brake by the use of the first hydraulic pressure system, the interlocking member rotates with the operation of the front-wheel brake lever and thus presses the piston of the front-wheel hydraulic pressure master cylinder to operate the front-wheel hydraulic pressure master cylinder. When the rear-wheel brake operation element is operated to operate the front-wheel brake by the use of the second hydraulic pressure system, the interlocking member rotates with the hydraulic operation of the interlocking slave cylinder in a state where the front-wheel brake lever is kept in a non-operating state and presses the piston of the front-wheel hydraulic pressure master cylinder to operate the front-wheel hydraulic pressure master cylinder (for example, see Japanese Patent Unexamined Publication JP-A-9-254771.

However, in the configuration described above, the front-wheel hydraulic pressure master cylinder and the interlocking slave cylinder are formed individually, a bracket protruding from the cylinder body of the front-wheel hydraulic pressure master cylinder and a bracket protruding from the cylinder body of the interlocking slave cylinder are integrally coupled to each other via a bolt, and the interlocking member and the front-wheel brake lever are disposed in opening sides of the front-wheel hydraulic pressure master cylinder and the interlocking slave cylinder. Accordingly, the interlocking brake system has increased in size.

### SUMMARY OF THE INVENTION

It is an object of the present invention to provide an interlocking brake system for a bar-handle vehicle in which the interlocking brake system can decrease in size as small as possible and from which an excellent operation feeling can be obtained.

In order to achieve the above-mentioned object, according to a first aspect of the invention, there is provided an interlocking brake system for a bar-handle vehicle, comprising an interlocking mechanism which performs such that:
when a rear brake operation element is operated, a rear-wheel hydraulic master cylinder supplies hydraulic pressure to a rear-wheel brake and an interlocking slave cylinder, and an interlocking member transmits a movement of a piston of the interlocking slave cylinder to a piston of a front-wheel hydraulic master cylinder to thereby supply the hydraulic pressure from the front-wheel hydraulic master cylinder to a front-wheel brake, and
when a front-wheel brake lever is operated, the interlocking member transmits an operation of the front-wheel brake lever to the piston of the front-wheel hydraulic master cylinder to thereby supply the hydraulic pressure from the front-wheel hydraulic master cylinder to the front-wheel brake,
the interlocking brake system is characterized in that:
   a cylinder bore of the interlocking slave cylinder and a cylinder bore of the front-wheel hydraulic pressure master cylinder are disposed in a cylinder body in parallel,
   both cylinder bores are opened adjacent to one side of the cylinder body, and
   the front-wheel brake lever and the interlocking member are hinged on a rotation axis positioned between two openings of the cylinder bore so as to pivot along axial directions of the cylinder bores,
   the interlocking member comprises:
      a hinged portion hinged on the rotation axis; and
      a master cylinder side operation arm and a slave cylinder side operation arm protruding from the hinged portion and abutting on a piston end of the front-wheel hydraulic pressure master cylinder and a piston end of the interlocking slave cylinder, respectively,
   a distance from the center of the rotation axis to an abutting portion between the slave cylinder side operation arm and the piston end of the interlocking slave cylinder is smaller than a distance from the center of the rotation axis to an abutting portion between the master cylinder side operation arm and the piston end of the front-wheel hydraulic pressure master cylinder, and
   the piston of the front-wheel hydraulic pressure master cylinder is adapted to slide to a full stroke when the piston of the interlocking slave cylinder moves to a full stroke.

According to a second aspect of the invention, as set forth in the first aspect of the invention, it is preferable that an edge portion of the piston of the interlocking slave cylinder is located closer to the cylinder body than the rotation axis and
an edge portion of the front-wheel hydraulic pressure master cylinder is located closer to the opposite side of the cylinder body than the rotation axis.

According to a third aspect of the invention, as set forth in the first or second aspect of the invention, it is preferable that the interlocking slave cylinder comprises:
the cylinder bore comprising:
   a large diameter cylinder portion on an opening side; and
   a small diameter cylinder portion on a bottom side ;
a piston, which is inserted into the cylinder bore of the interlocking slave cylinder and comprises:
   a large diameter shaft portion inserted to the small diameter cylinder portion;
   a medium diameter shaft portion inserted to the large diameter cylinder portion;
   a large diameter flange portion formed between the medium diameter shaft portion and the large diameter shaft portion; and
   a small diameter edge portion extending from the medium diameter shaft portion;
a drop-out preventing member, which is fitted to the opening side of the large diameter cylinder portion with a ring-shaped stopper member therebetween and comprises:
   a large diameter cylindrical portion coming in close contact with the inner peripheral surface of the large diameter cylinder portion;
   a small diameter cylindrical portion inserted into the inner periphery of the stopper member;
   an insertion hole of the small diameter edge portion of the piston; and
   a spring receiving protruding to the cylinder bore bottom on the outer periphery of the large diameter cylindrical portion, and
      wherein the medium diameter shaft portion abuts on the large diameter cylindrical portion to thereby preventing from drop-out of the piston and restricting a stroke of the piston, and
      a return spring biasing the piston of the interlocking slave cylinder to the bottom of the cylinder bore is disposed between the spring receiving of the drop-out preventing member and the large flange portion of the piston in a shrinked manner.

As described above, in the first aspect of the invention, the distance from the center of the rotation axis to the abutting portion between the slave cylinder side operation arm and the piston end of the interlocking slave cylinder is smaller than the distance from the center of the rotation axis to the abutting portion between the master cylinder side operation arm and the piston end of the front-wheel hydraulic pressure master cylinder. Accordingly, since the amount of stroke of the piston can be reduced to shorten the axial length of the interlocking slave cylinder and the interlocking slave cylinder can be formed closer to the front-wheel hydraulic pressure master cylinder, it is possible to reduce the size of the cylinder body. It is possible to accomplish the reduction in size of the interlocking slave cylinder and the cylinder bode and to sufficiently move the piston of the front-wheel hydraulic pressure master cylinder to a full stroke in accordance with the operation of the interlocking slave cylinder.

When the piston of the interlocking slave cylinder moves to a full stroke, the piston of the front-wheel hydraulic pressure master cylinder does not move to a full stroke. Accordingly, even when the operation element of the rear-wheel brake is successively operated strongly, there is no possibility that the hydraulic pressure of the front-wheel brake increases to cause a brake lock of the front-wheel brake or the return spring of the front-wheel hydraulic pressure master cylinder adheres closely. In a state where the operation element of the rear-wheel brake is operated to operate the front-wheel brake through the interlocking slave cylinder, even when the front-wheel brake lever is operated to operate the front -wheel brake, it is possible to obtain an excellent operation feeling.

In the second aspect of the invention, the protruding force of the piston of the interlocking slave cylinder can be efficiently used as the rotational force of the interlocking member and the rotational force of the interlocking member can be efficiently used as a pressing force of the piston of the front-wheel hydraulic pressure master cylinder.

In the third aspect of the invention, it is possible to prevent the drop-output of the piston of the interlocking slave cylinder and the restriction of stroke and to position the return spring.

### BRIEF DESCRIPTION OF THE DRAWINGS

Fig. 1 is a front sectional view illustrating a part of an interlocking brake system according to an embodiment of the invention;
Fig. 2 is a front sectional view illustrating a part of the interlocking brake system at the time of operating a front-wheel brake lever;
Fig. 3 is a front sectional view illustrating a part of the interlocking brake system at the time of operating a rear-wheel brake pedal;
Fig. 4 is a side sectional view illustrating a part of the interlocking brake system;
Fig. 5 is a cross-sectional view taken along Line V-V of Fig. 4; and
Fig. 6 is an explanatory diagram illustrating the interlocking brake system.

### Best Mode for Carrying out the Invention

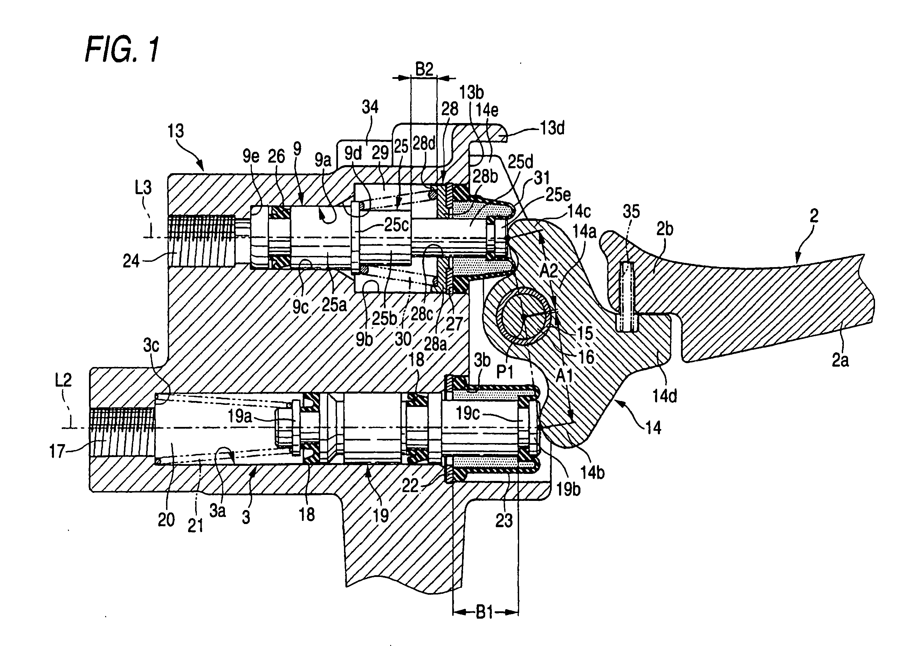

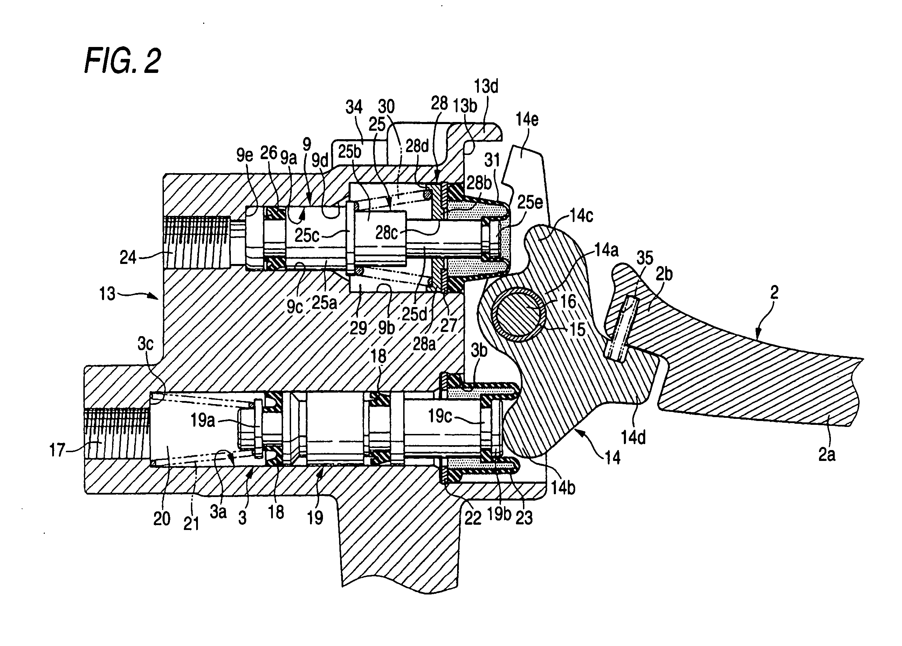

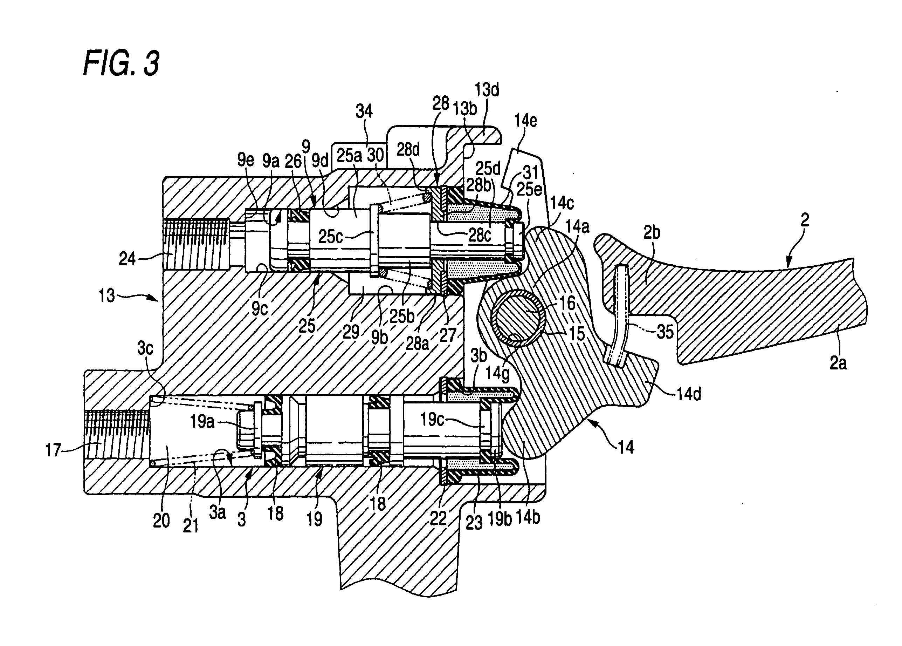

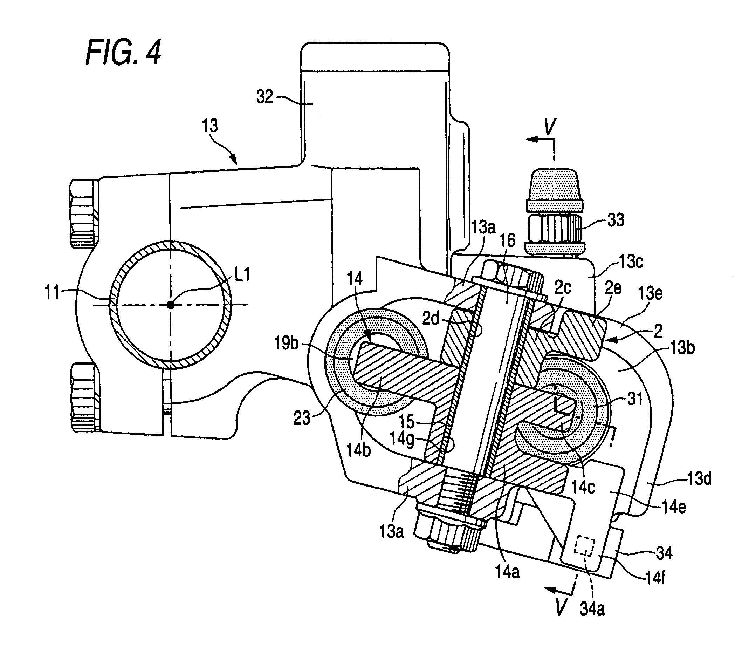

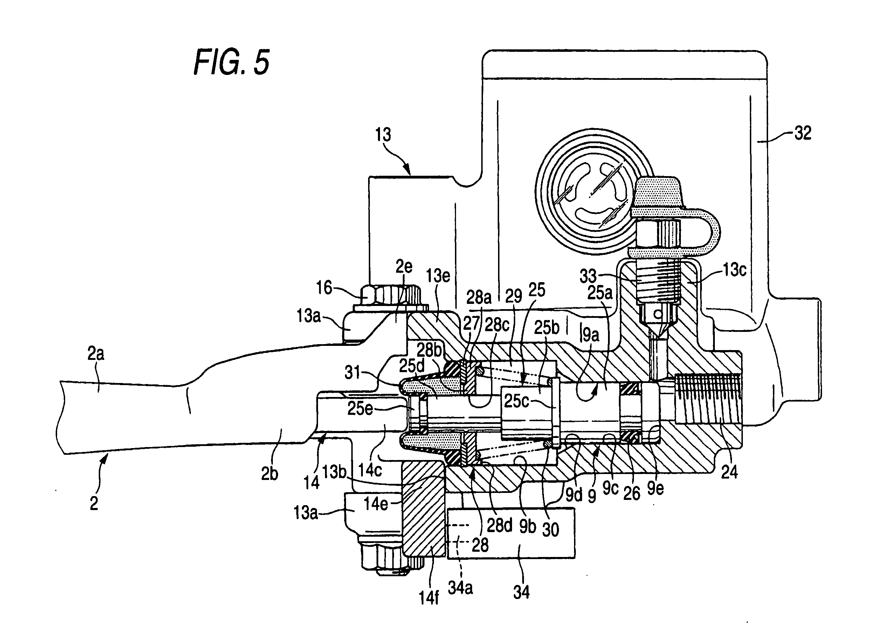

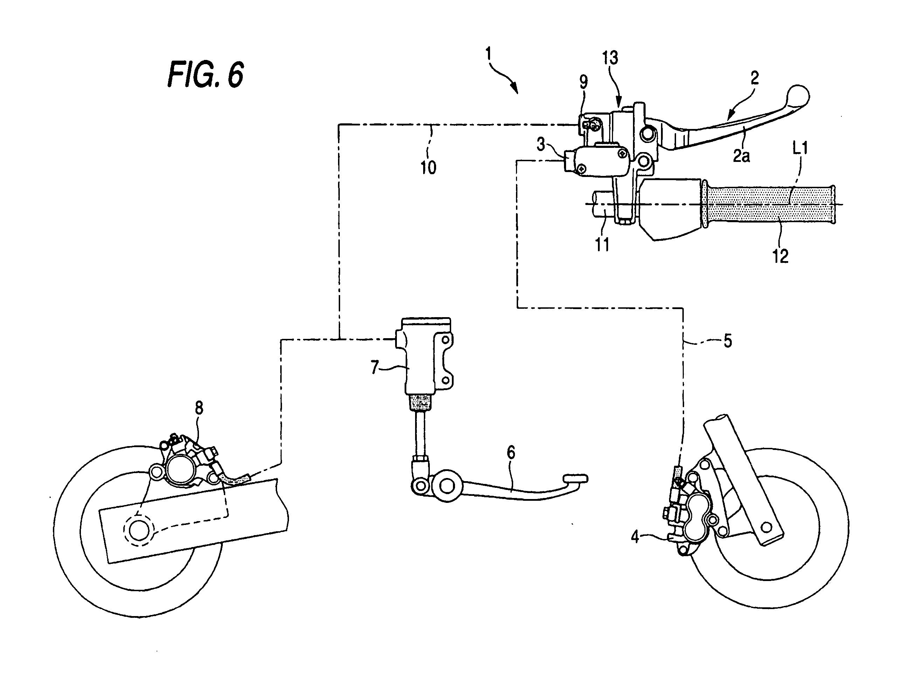

Hereinafter, embodiments of the invention will be described in detail with reference to the drawings. Fig. 1 is a front sectional view illustrating a part of an interlocking brake system, Fig. 2 is a front sectional view illustrating a part of the interlocking brake system at the time of operating a front-wheel brake lever, Fig. 3 is a front sectional view illustrating a part of the interlocking brake system at the time of operating a rear-wheel brake pedal, Fig. 4 is a side sectional view illustrating a part of the interlocking brake system, Fig. 5 is a cross-sectional view taken along Line V-V of Fig. 4, and Fig. 6 is an explanatory diagram illustrating the interlocking brake system.

As shown in Fig. 2, the interlocking brake system for the bar-handle vehicle 1 according to this embodiment includes a first hydraulic pressure system 5 for supplying a hydraulic pressure from a front-wheel hydraulic pressure master cylinder 3 to a front-wheel brake 4 in accordance with the operation of a front-wheel brake bar 2 and a second hydraulic pressure system 10 for supplying a hydraulic pressure from a rear-wheel hydraulic pressure master cylinder 7 to a rear-wheel brake 8 in accordance with the operation of a brake pedal as an operation element of the rear-wheel brake and operating the front-wheel hydraulic pressure master cylinder 3 through an interlocking slave cylinder 9 to supply the hydraulic pressure to the front-wheel brake 4.

The front-wheel hydraulic pressure master cylinder 3 and the interlocking slave cylinder 9 are disposed in parallel in the cylinder body 13 fitted into the vehicle body adjacent to an accelerator grip 12 of a handle bar 11 for steering the front wheel on the front portion of the bar-handle vehicle body. On one side of the cylinder body 13, a pair of upper and lower lever brackets 13a and 13a is disposed to protrude from an intermediate position between cylinder bores of the front-wheel hydraulic pressure master cylinder 3 and the interlocking slave cylinder 9. A bracket lever 2 and an interlocking member 14 are disposed in the lever brackets 13a and 13a so as to pivot along the axial line L2 and an axial line L3 by the use of a collar 15 and a pivot 16 disposed at an intermediate position between the axial line L2 of the front-wheel hydraulic pressure master cylinder 3 and the axial line L3 of the interlocking slave cylinder 9. That is, the collar 15 and the pivot 16 are provided perpendicular to the plane passing through the axial line L2 and the axial line L3 and the front-wheel brake lever 2 and the interlocking member 14 are provided to rotate along the plane passing through the axial line L2 and the axial line L3.

The front-wheel hydraulic pressure master cylinder 3 is disposed at a position of the cylinder body 13 close to the handle bar 11. A bottomed first cylinder bore 3a used in the front-wheel hydraulic pressure master cylinder 3 is formed along the axial line L1 of the handle bar 11, more specifically, parallel to the axial line L1, and is opened in one side surface 13b of the cylinder body 13. A large diameter portion 3b is formed on the opening side and a hydraulic fluid supply port 17 for supplying a hydraulic fluid to the front-wheel brake 4 is formed in the bottom portion 3c of the first cylinder bore 3a. A first piston 19 is inserted into the first cylinder bore 3a through two cup seals 18 and 18 and a hydraulic chamber 20 is defined between the first piston 19 and the bottom portion 3c of the first cylinder bore 3a. The first piston 19 is biased toward the opening by a first return spring 21 disposed between a flange portion 19a formed on the base side of the first piston 19 and the bottom portion 3c. The retreat limit is restricted by a circlip 22 provided in a large diameter portion 3b of the first-cylinder bore 3a. The edge portion 19b of the first piston 19 in a non-operating state protrudes from the first cylinder bore 3a. A first dust boot 23 is disposed between a ring-shaped groove 19c formed in the vicinity of the edge portion 19b and the opening side of the large diameter portion 3b.

The interlocking slave cylinder 9 is disposed at a position distant from the handle bar 11 of the cylinder body 13. The axial line L3 of a bottomed second cylinder bore 9a used in the interlocking slave cylinder 9 is formed along the axial line L2 of the first cylinder bore 3a. The bottomed second cylinder bore 9a is opened in the one side surface 13b of the cylinder body 13, and includes a large diameter cylinder portion 9b close to the opening, a small diameter cylinder portion 9c close to the bottom portion, and a conical portion 9d connecting the large diameter cylinder portion 9b and the small diameter cylinder portion 9c to each other. A hydraulic fluid introduction port 24 to which the hydraulic pressure is supplied with the operation of the brake pedal 6 is formed in the bottom portion 9e of the second cylinder bore 9a to communicate with the small diameter cylinder portion 9c. The second piston 9b includes a large diameter shaft portion 25a inserted into the small cylinder portion 9c, a medium diameter shaft portion 25b inserted into the large diameter cylinder portion 9b, a large diameter flange portion 25c formed between the medium diameter shaft portion 25a and the large diameter shaft portion 25a, and a small diameter edge portion 25d successive to the medium diameter shaft portion 25b. The second piston 25 is inserted into the second cylinder bore 9a through a cup seal 26.

A drop-out preventing member 28 is fitted to the opening side of the large diameter cylinder portion 9b with a circlip 27 (a stopper member of the invention), The drop-out preventing member 28 includes a large diameter cylindrical portion 28a coming into close contact with the inner peripheral surface of the large diameter cylinder portion 9b, a small diameter cylindrical portion 28b inserted into the inner periphery of the circlip 27, an insertion hole 28c of a small diameter edge portion 25d formed at the center of the drop-out preventing member 28, and a spring receiving 28d protruding to the cylinder bore bottom successive to the outer periphery of the large diameter cylindrical portion 28a. By fitting the drop-out preventing member 28 to the opening of the large diameter cylinder portion 9b, an air chamber 29 is defined among the drop-out preventing member 28, the large diameter cylinder portion 9b, and the conical portion 9d. In the second piston 25, by allowing the medium diameter shaft portion 25b to abut on the large diameter cylindrical portion 28a, the drop-out prevention of the second piston 25 and the restriction of stroke thereof are performed. A return spring 30 urging the second piston 25 to the cylinder bore bottom is pivotally disposed between the spring receiving 28d of the drop-out preventing member 28 and the large diameter flange portion 25c of the second piston. In a non-operation state, the edge portion 25e of the second piston 25 protrudes from the second cylinder bore 9a and a second dust boot 31 is disposed between the edge portion 25e and the opening of the large diameter cylinder portion 9b.

In the cylinder body 13, a reservoir tank 32 communicating with the first cylinder bore 3a through a port (not shown) is formed in the upper portion of the front-wheel hydraulic pressure master cylinder 3, a breather boss portion 13c is formed integrally with the upper portion of the interlocking slave cylinder 9 so as to be adjacent to the reservoir tank 32, and a breather 33 is provided in the breather boss portion 13c. A brake lamp switch 34 is provided in the lower portion of the cylinder body 13 and an operation element 34a of the brake lamp switch 34 is disposed to protrude from the one side surface 13b of the cylinder body 13.

The brake lever 2 is formed in a rod shape and smoothly curved along the front side of the accelerator grip 12. The brake lever includes an operation portion 2a operated by an operator, an interlocking member pressing arm 2b extending from the base portion of the operation portion 2a so as to press the interlocking member 14 to rotate, and a hinged portion 2c supported by the lever bracket 13a and 13a of the cylinder body 13, which are formed in a body. An insertion hole 2d for the pivot 16 and the collar 15 is formed in the hinged portion 2c and a rotation restricting piece 2e abutting on one side of the cylinder body 13 and restricting the rotation of the interlocking slave cylinder of the brake lever 2 extends therefrom.

The interlocking member 14 includes a middle hinged portion 14a supported by the'lever brackets 13a and 13a of the cylinder body 13, an arc-shaped master cylinder side operation arm 14b and an arc-shaped slave cylinder side operation arm 14c extending from the hinged portion 14a and abutting on the edge portions of the first piston 19 and the second piston 25, respectively, an abutting arm 14d opposite to the interlocking member pressing arm 2b formed in the brake lever 2, a rotation restricting piece 14e abutting on the one side surface 13b of the cylinder body 13 to restrict the rotation of the interlocking member 14, and a switch operation portion 14f extending from the rotation restricting piece 14e to press the operation element 34a of the brake lamp switch 34, which are all formed in integral manner. An insertion hole 14g for the pivot 16 and the collar 15 is formed in the hinged portion 14a. A spring member 35 urging the brake lever 2 to a non-operating position is pivotally formed between the abutting arm 14d and the interlocking member pressing arm 2b. A first cover wall portion 13d covering the abutting portion between the rotation restricting piece 14a of the interlocking member 14 and the one side surface 13b is formed on the side of the cylinder body 13 opposite to the bar handle and a second cover wall portion 13e covering the abutting portion is formed in the upper side of the cylinder body 13.

In the above-mentioned interlocking brake system 1, as shown in Fig. 1 in the state where the brake lever 2 and the brake pedal 6 are not operated, the rotation of the brake lever 2 is restricted by allowing the rotation restricting piece 2e to abut on the one side of the cylinder body 13 in accordance with the elastic force of the first return spring 21 of the front-wheel hydraulic pressure master cylinder 3, the second return spring 30 of the interlocking slave cylinder 9, and the spring member 35. The rotation of the interlocking member 14 is restricted by allowing the rotation restricting piece 14e to abut on the one side surface 13b. The switch operation portion 14f provided in the interlocking member 14 presses the operation element 34a and thus the brake lamp switch 34 is in the OFF state.

In the non-operating state, when it is assumed that the distance from the center P1 of the pivot 16 as a rotation axis to the abutting portion between the master cylinder side operation arm 14b and the edge portion 19b of the first piston 19 of the front-wheel hydraulic pressure master cylinder 3 is A1, and the distance from the center P1 to the abutting portion between the slave cylinder side operation arm 14c and the edge portion 25e of the second piston 25 of the interlocking slave cylinder 9 is A2, the relation of A1>A2 is satisfied and A2/A1 is a lever ratio of the interlocking member 14. When it is assumed that the distance of the end surface of the first dust boot fitted into the ring-shaped groove 19c moving from the non-operating state to the abutting state on the -circlip 22, which is the amount of full-stroke of the first piston 19, is B1 and the distance of the medium diameter shaft portion 19b moving from the non-operating state to the abutting state on large diameter cylindrical portion 28a of the drop-out preventing member 28, which is the amount of full stroke of the second piston 25, is B1, B2<B1 is satisfied. Even when the second piston 25 of the interlocking slave cylinder 9 performs the full stroke, the first piston 19 of the front-wheel hydraulic pressure master cylinder 3 can slide to the full stroke.

In the interlocking slave cylinder 9, the edge portion 25e of the second piston 25 is located closer to the cylinder body than the center P1 of the pivot and in the front-wheel hydraulic pressure master cylinder 3, the edge portion 19b of the first piston 19 is located closer to the opposite side of the cylinder body than the center P1 of the pivot.

When the brake lever 2 rotates from the non-operating state, as shown in Fig. 2, the interlocking member pressing arm 2b of the brake lever 2 presses the abutting arm 14d of the interlocking member 14, the brake lever 2 and the interlocking member 14 rotate toward the front-wheel hydraulic pressure master cylinder 3 about the pivot 16, and the master cylinder side operation arm 14b of the interlocking member 14 presses the first piston 19 to the cylinder bore bottom against the elastic force of the first return spring 21. Accordingly, a hydraulic pressure is generated in the hydraulic chamber 20 and the hydraulic pressure is supplied to the front-wheel brake 4 through the first hydraulic pressure system 5 from the hydraulic fluid supply port 17, thereby operating the front-wheel brake 4. With the rotation of the brake lever 2, the rotation restricting piece 2e of the brake lever 2 becomes distant from the one side of the cylinder body 13, the rotation restricting piece 14e of the interlocking member 14 becomes distant from the one side surface 13b, and the switch operation portion 14f becomes distant from the operation element 34a. Accordingly, the operation element 34a of the brake lamp switch 34 protrudes and the brake lamp switch 34 is changed to the ON state, thereby lighting a brake lamp not shown.

When the brake pedal 6 is operated, as shown in Fig. 3, a hydraulic pressure is generated in a hydraulic chamber (not shown) of the rear-wheel hydraulic pressure master cylinder 7 and the hydraulic pressure is supplied to the rear-wheel brake 8 through the second hydraulic pressure system 10, thereby operating the rear-wheel brake 8. On the other hand, the hydraulic pressure generated in the hydraulic chamber of the rear-wheel hydraulic pressure master cylinder 7 is supplied to the second cylinder bore 9a through the second hydraulic pressure system 10 from the hydraulic fluid introduction port 24 of the interlocking slave cylinder 9, thereby pressing the second piston 25 to the cylinder bore opening against the elastic force of the second return spring 30. Accordingly, the edge portion 25e of the second piston 25 protrudes from the cylinder bore opening and pressed the slave cylinder side operation arm 14c of the interlocking member 14, thereby rotating the interlocking member 14 to the front-wheel hydraulic pressure master cylinder 3 about the pivot 16. The interlocking member 14 rotates independently with the brake lever 2 kept in the non-operating state in accordance with the expansion of the spring member 35 and the master cylinder side operation arm 14b operates the front-wheel hydraulic pressure master cylinder 3, thereby operating the front-wheel brake 4 as described above. At this time, as the rotation restricting piece 14e of the interlocking member 14 becomes apart from the one side surface 13b, the brake lamp switch 34 is changed to the ON state as described above, thereby lighting the brake lamp.

In the interlocking brake system 1 described above, the distance A2 from the center P1 of the pivot 16 to the abutting portion between the slave cylinder side operation arm 14c and the edge portion 25e of the second piston 25 of the interlocking slave cylinder 9 is smaller than the distance A1 from the center P1 to the abutting portion between the master cylinder side operation arm 14b and the edge portion 19b of the first piston 19 of the front-wheel hydraulic pressure master cylinder 3. Accordingly, since the amount of stroke of the second piston 25 of the interlocking slave cylinder 9 can be reduced to shorten the axial length of the interlocking slave cylinder 9 and the interlocking slave cylinder 9 can be formed close to the front-wheel hydraulic pressure master cylinder 3, it is possible to reduce the size of the cylinder body 13. In this way, it is possible to reduce the size of the interlocking slave cylinder 9 and the cylinder body 13 and to sufficiently move the first piston 19 of the front-wheel hydraulic pressure master cylinder to the full stroke in accordance with the operation of the interlocking slave cylinder 9 in accordance with the lever ratio of the interlocking member 14. Even when the amount of full stroke B2 of the second piston 25 of the interlocking slave cylinder 9 is smaller than the amount of full stroke B1 of the first piston 19 of the front-wheel hydraulic pressure master cylinder 3 and the second piston 25 moves to the full stroke, the first piston 19 can slide to the full stroke. Accordingly, even when the brake pedal 6 is strongly operated, the hydraulic pressure of the front-wheel brake is not more than necessary and there is no possibility that the front-wheel brake 4 causes the brake lock or the first return spring 21 of the front-wheel hydraulic pressure master cylinder 3 is adhered closely. Even when the brake pedal 6 is operated to operate the front-wheel brake 4 through the second hydraulic pressure system 10 and then the brake lever 2 is operated to operate the front-wheel brake 4 through the first hydraulic pressure system 5, it is possible to obtain an excellent operation feeling.

In the non-operation state, the edge portion 25e of the second piston 25 of the interlocking slave cylinder 9 is located closer to the cylinder body than the center P1 of the pivot and the edge portion 19b of the first piston 19 of the front-wheel hydraulic pressure master cylinder 3 is located closer to the opposite side of the cylinder body than the center P1 of the pivot 16. Accordingly, the protruding force of the second piston 25 of the interlocking slave cylinder 9 can be efficiently used as the rotating force of the interlocking member 14 and the rotating force of the interlocking member 14 can be efficiently used as the pressing force of the first piston 19 of the front-wheel hydraulic pressure master cylinder 3.

The interlocking slave cylinder 9 performs the preventing of drop-out and the restriction of stroke by the use of the drop-out preventing member 28 and the second return spring 30 can be positioned by the use of the spring receiving 28d and the large diameter flange portion 25c of the second piston 25.

The invention is not limited to the above-mentioned embodiments, but the operation element of the rear-wheel brake may be a brake lever. The invention may be applied to a longitudinal brake system in which the cylinder body is disposed so that the axial line of the cylinder bore is perpendicular to the axial line of the handle bar.

## Claims

1. An interlocking brake system for a bar-handle vehicle, comprising an interlocking mechanism which performs such that:
when a rear brake operation element (6) is operated, a rear-wheel hydraulic master cylinder (7) supplies hydraulic pressure to a rear-wheel brake (8) and an interlocking slave cylinder (4), and an interlocking member (14) transmits a movement of a piston of the interlocking slave cylinder (4) to a piston of a front-wheel hydraulic master cylinder (3) to thereby supply the hydraulic pressure from the front-wheel hydraulic master cylinder (3) to a front-wheel brake (4), and
when a front-wheel brake lever (2) is operated, the interlocking member (14) transmits an operation of the front-wheel brake lever (2) to the piston of the front-wheel hydraulic master cylinder (3) to thereby supply the hydraulic pressure from the front-wheel hydraulic master cylinder (3) to the front-wheel brake (4),
the interlocking brake system is **characterized in that**:
a cylinder bore of the interlocking slave cylinder and a cylinder bore of the front-wheel hydraulic pressure master cylinder are disposed in a cylinder body (13) in parallel,
both cylinder bores are opened adjacent to one side of the cylinder body, and
the front-wheel brake lever (2) and the interlocking member (14) are hinged on a rotation axis (16) positioned between two openings of the cylinder bore so as to pivot along axial directions of the cylinder bores,
the interlocking member (14) comprises:
a hinged portion hinged on the rotation axis and
a master cylinder side operation arm and a slave cylinder side operation arm protruding from the hinged portion and abutting on a piston end of the front-wheel hydraulic pressure master cylinder and a piston end of the interlocking slave cylinder, respectively,
a distance (12) from the center of the rotation axis (16) to an abutting portion between the slave cylinder side operation arm and the piston end of the interlocking slave cylinder (4) is smaller than a distance (12) from the center of the rotation axis to an abutting portion between the master cylinder side operation arm and the piston end of the front-wheel hydraulic pressure master cylinder (3), and
the piston of the front-wheel hydraulic pressure master cylinder (3) is adapted to slide to a full stroke when the piston of the interlocking slave cylinder (4) moves to a full stroke.

2. The interlocking brake system for the bar-handle vehicle according to Claim 1, is **characterized in that**:
an edge portion of the piston of the interlocking slave cylinder is located closer to the cylinder body than the rotation axis and
an edge portion of the front-wheel hydraulic pressure master cylinder is located closer to the opposite side of the cylinder body than the rotation axis.

3. The interlocking brake system for the bar-handle vehicle according to Claim 1 or 2, is **characterized in that** the interlocking slave cylinder comprise:
the cylinder bore comprising:
a large diameter cylinder portion on an opening side; and
a small diameter cylinder portion on a bottom slide;
a piston, which is inserted into the cylinder bore of the interlocking slave cylinder and comprises:
a large diameter shaft portion inserted to the small diameter cylinder portion;
a medium diameter shaft portion inserted to the large diameter cylinder portion;
a large diameter flange portion formed between the medium diameter shaft portion and the large diameter shaft portion; and
a small diameter edge portion extending from the medium diameter shaft portion;
a drop-out preventing member, which is fitted to the opening side of the large diameter cylinder portion with a ring-shaped stopper member therebetween and comprises:
a large diameter cylindrical portion coming in close contact with the inner peripheral surface of the large diameter cylinder portion;
a small diameter cylindrical portion inserted into the inner periphery of the stopper member;
an insertion hole of the small diameter edge portion of the piston; and
a spring receiving protruding to the cylinder bore bottom on the outer periphery of the large diameter cylindrical portion,
wherein the medium diameter shaft portion abuts on the large diameter cylindrical portion to thereby preventing from drop-out of the piston and restricting a stroke of the piston, and
a return spring biasing the piston of the interlocking slave cylinder to the bottom of the cylinder bore is disposed between the spring receiving of the drop-out preventing member and the large flange portion of the piston in a shrinked manner.

## Patentansprüche

1. Verriegelungsbremssystem für ein Grifffahrzeug umfassend einen Verriegelungsmechanismus, der derart funktioniert, dass:
ein Hinterradhydraulikhauptzylinder (7) einen Hydraulikdruck einer Hinterradbremse (8) und einem Verriegelungsnebenzylinder (9) zuführt, und ein Verriegelungselement (14) eine Bewegung eines Kolbens des Verriegelungsnebenzylinders (9) auf einen Kolben eines Vorderradhydraulikhauptzylinders (3) überträgt, um **dadurch** den Hydraulikdruck von dem Vorderradhydraulikhauptzylinder (3) einer Vorderradbremse (4) zuzuführen, wenn ein rückseitiges Bremsbetriebselement (6) betrieben wird, und
das Verriegelungselement (14) eine Betätigung des Vorderradbremshebels (2) auf den Kolben des Vorderradhydraulikhauptzylinders (3) überträgt, um **dadurch** den Hydraulikdruck von dem Vorderradhydraulikhauptzylinder (3) der Vorderradbremse (4) zuzuführen, wenn ein Vorderradbremshebel (2) betätigt wird,
wobei das Verriegelungsbremssystem **dadurch gekennzeichnet ist, dass**:
eine Zylinderbohrung des Verriegelungsnebenzylinders und eine Zylinderbohrung des Vorderradhydraulikdruckhauptzylinders in einem Zylinderkörper (13) parallel angeordnet sind,
wobei beide Zylinderbohrungen benachbart zu einer Seite des Zylinderkörpers geöffnet sind, und
der Vorderradbremshebel (2) und das Verriegelungselement (14) auf einer Rotationsachse (16) schwenkbar zwischen zwei Öffnungen der Zylinderbohrung positioniert sind, um entlang axialer Richtungen der Zylinderbohrungen zu schwenken,
wobei das Verriegelungselement (14) umfasst:
einen Gelenkabschnitt, der gelenkig an der Rotationsachse angebracht ist, und
einen Hauptzylinderseitenbetätigungsarm und einen Nebenzylinderseitenbetätigungsarm, die von dem Gelenkabschnitt vorstehen und jeweils an ein Kolbenende des Vorderradhydraulikdruckhauptzylinders und ein Kolbenende des Verriegelungsnebenzylinders anschlagen,
wobei ein Abstand (12) von der Mitte der Rotationsachse (16) zu einem Anschlagabschnitt zwischen dem Nebenzylinderseitenbetätigungsarm und dem Kolbenende des Verriegelungsnebenzylinders (9) kleiner als ein Abstand (12) von der Mitte der Rotationsachse zu einem Anschlagabschnitt zwischen dem Hauptzylinderseitenbetätigungsarm und dem Kolbenende des Vorderradhydraulikdruckhauptzylinders (3) ist, und
der Kolben des Vorderradhydraulikdruckhauptzylinders (3) angepasst ist, um zu einem vollen Hub zu gleiten, wenn sich der Kolben des Verriegelungsnebenzylinders (9) zu einem vollen Hub bewegt.

2. Verriegelungsbremssystem für das Grifffahrzeug nach Anspruch 1, **dadurch gekennzeichnet, dass**:
ein Kantenabschnitt des Kolbens des Verriegelungsnebenzylinders näher an dem Zylinderkörper als der Rotationsachse angeordnet ist, und
ein Kantenabschnitt des Vorderradhydraulikdruckhauptzylinders näher an der gegenüberliegenden Seite des Zylinderkörpers als der Rotationsachse angeordnet ist.

3. Verriegelungsbremssystem für das Grifffahrzeug nach Anspruch 1 oder 2, **dadurch gekennzeichnet, dass** der Verriegelungsnebenzylinder umfasst:
die Zylinderbohrung umfassend:
einen Zylinderabschnitt eines großen Durchmesser an einer Öffnungsseite; und
einen Zylinderabschnitt eines kleinen Durchmessers an einer Bodenseite;
einen Kolben, der in die Zylinderbohrung des Verriegelungsnebenzylinders eingesetzt ist und umfasst:
einen Schaftabschnitt eines großen Durchmessers, der in den Zylinderabschnitt des kleinen Durchmessers eingesetzt wird;
einen Schaftabschnitt eines mittleren Durchmessers, der in den Zylinderabschnitt des großen Durchmessers eingesetzt wird;
einen Flanschabschnitt eines großen Durchmessers, der zwischen dem Schaftabschnitt des mittleren Durchmessers und dem Schaftabschnitt des großen Durchmessers ausgebildet ist; und
einen Kantenabschnitt eines kleinen Durchmessers, der sich von dem Schaftabschnitt des mittleren Durchmessers erstreckt;
ein Ausfallverhinderungselement, das an die Öffnungsseite des Zylinderabschnitts des großen Durchmessers mit einem ringförmigen Stoppelement dazwischen gefügt ist und umfasst:
einen zylindrischen Abschnitt eines großen Durchmessers, der in engen Kontakt mit der inneren Umfangsoberfläche des Zylinderabschnitts des großen Durchmessers kommt;
einen zylindrischen Abschnitt eines kleinen Durchmessers, der in den inneren Umfang des Stoppelements eingesetzt ist;
eine Einführungsöffnung des Kantenabschnitts des kleinen Durchmessers des Kolbens; und
eine Federaufnahme, die zu dem Zylinderbohrungsboden an dem äußeren Umfang des Zylinderabschnitts des großen Durchmessers vorsteht,
wobei der Schaftabschnitt des mittleren Durchmessers gegen den Zylinderabschnitt des großen Durchmessers anschlägt, um **dadurch** ein Ausfallen des Kolbens zu verhindern und einen Hub des Kolbens zu begrenzen, und
eine Rückführfeder, die den Kolben des Verriegelungsnebenzylinders zu dem Boden der Zylinderbohrung vorspannt, zwischen der Federaufnahme des Ausfallsverhinderungselements und dem großen Flanschabschnitt des Kolbens in einer geschrumpften Weise angeordnet ist.

## Revendications

1. Système de frein à verrouillage pour un véhicule à guidon, comprenant un mécanisme de verrouillage qui fonctionne de sorte que :
lorsqu'un élément de mise en oeuvre de frein arrière (6) est mis en oeuvre, un maître-cylindre hydraulique de roue arrière (7) fournit une pression hydraulique à un frein de roue arrière (8) et à un cylindre asservi de verrouillage (9), et un élément de verrouillage (14) transmet un mouvement d'un piston du cylindre asservi de verrouillage (9) à un piston d'un maître-cylindre hydraulique de roue avant (3) pour fournir de ce fait la pression hydraulique en provenance du maître-cylindre hydraulique de roue avant (3) à un frein de roue avant (4), et
lorsqu'un levier de frein de roue avant (2) est mis en oeuvre, l'élément de verrouillage (14) transmet une mise en oeuvre du levier de frein de roue avant (2) au piston du maître-cylindre hydraulique de roue avant (3) pour fournir de ce fait la pression hydraulique en provenance du maître-cylindre hydraulique de roue avant (3) au frein de roue avant (4),
le système de frein à verrouillage est **caractérisé en ce que** :
un alésage de cylindre du cylindre asservi de verrouillage et un alésage de cylindre du maître-cylindre de pression hydraulique de roue avant sont disposés dans un corps de cylindre (13) en parallèle,
les deux alésages de cylindre sont ouverts en contiguïté à un côté du corps de cylindre, et
le levier de frein de roue avant (2) et l'élément de verrouillage (14) sont articulés sur un axe de rotation (16) positionné entre deux ouvertures de l'alésage de cylindre de façon à pivoter le long de directions axiales des alésages de cylindre,
l'élément de verrouillage (14) comprend :
une partie articulée étant articulée sur l'axe de rotation
et
un bras de mise en oeuvre côté maître-cylindre et un bras de mise en oeuvre côté cylindre asservi dépassant de la partie articulée et butant respectivement sur une extrémité de piston du maître-cylindre de pression hydraulique de roue avant et sur une extrémité de piston du cylindre asservi de verrouillage,
une distance (12) allant du centre de l'axe de rotation (16) jusqu'à une partie de butée entre le bras de mise en oeuvre côté cylindre asservi et l'extrémité de piston du cylindre asservi de verrouillage (9) est plus petite qu'une distance (12) allant du centre de l'axe de rotation jusqu'à une partie de butée entre le bras de mise en oeuvre côté maître-cylindre et l'extrémité de piston du maître-cylindre de pression hydraulique de roue avant (3), et
le piston du maître-cylindre de pression hydraulique de roue avant (3) est conçu pour coulisser à pleine course quand le piston du cylindre asservi de verrouillage (9) se déplace à pleine course.

2. Le système de frein à verrouillage pour le véhicule à guidon selon la revendication 1, est **caractérisé en ce qu'** :
une partie de bord du piston du cylindre asservi de verrouillage est située plus près du corps de cylindre que l'axe de rotation, et
une partie de bord du maître-cylindre de pression hydraulique de roue avant est située plus près du côté opposé du corps de cylindre que l'axe de rotation.

3. Le système de frein à verrouillage pour le véhicule à guidon selon la revendication 1 ou 2, est **caractérisé en ce que** le cylindre asservi de verrouillage comprend :
l'alésage de cylindre comprenant :
une partie de cylindre de grand diamètre sur un côté ouverture ; et
une partie de cylindre de petit diamètre sur un côté fond ;
un piston, qui est inséré dans l'alésage de cylindre du cylindre asservi de verrouillage et comprend :
une partie d'arbre de grand diamètre insérée dans la partie de cylindre de petit diamètre ;
une partie d'arbre de diamètre intermédiaire insérée dans la partie de cylindre de grand diamètre ;
une partie de rebord de grand diamètre formée entre la partie d'arbre de diamètre intermédiaire et la partie d'arbre de grand diamètre ; et
une partie de bord de petit diamètre s'étendant à partir de la partie d'arbre de diamètre intermédiaire ;
un élément de prévention de retrait, qui est ajusté au côté ouverture de la partie de cylindre de grand diamètre avec un élément de butée annulaire entre ceux-ci et comprend :
une partie cylindrique de grand diamètre entrant en contact étroit avec la surface périphérique intérieure de la partie de cylindre de grand diamètre ;
une partie cylindrique de petit diamètre insérée dans la périphérie intérieure de l'élément de butée ;
un trou d'insertion de la partie de bord de petit diamètre du piston ; et
une partie de réception de ressort dépassant vers le fond d'alésage de cylindre sur la périphérie extérieure de la partie cylindrique de grand diamètre,
dans lequel la partie d'arbre de diamètre intermédiaire bute sur la partie cylindrique de grand diamètre empêchant de ce fait un retrait du piston et limitant une course du piston, et
un ressort de retour sollicitant le piston du cylindre asservi de verrouillage vers le fond de l'alésage de cylindre est disposé entre la partie de réception de ressort de l'élément de prévention de perte de niveau et la grande partie de rebord du piston d'une façon rétrécie.
